## Europäisches Patentamt
## European Patent Office
## Office européen des brevets

(11) Veröffentlichungsnummer: **0 162 004**
**A2**

(12) **EUROPÄISCHE PATENTANMELDUNG**

(21) Anmeldenummer: **85730050.3**

(22) Anmeldetag: **02.04.85**

(51) Int. Cl.⁴: **G 06 F 11/22, G 06 F 11/32**

(30) Priorität: **13.04.84 DE 3414511**

(43) Veröffentlichungstag der Anmeldung: **21.11.85**
**Patentblatt 85/47**

(84) Benannte Vertragsstaaten: **DE FR GB NL**

(71) Anmelder: **Siemens Aktiengesellschaft, Berlin und München Wittelsbacherplatz 2, D-8000 München 2 (DE)**

(72) Erfinder: **Metzger, Klaus, Dr.-Ing., Suchlandstrasse 9, D-1000 Berlin 41 (DE)**

(54) **Verfahren zur Darstellung der Daten eines in einem Speicher eines Rechners gespeicherten Programms.**

(57) Die Erfindung bezieht sich auf ein Verfahren zur Darstellung eines im Betrieb einer elektronischen Schaltungsanordnung aufgenommenen und in einem Speicher eines Rechners gespeicherten Programms auf einem Anzeigeteil eines dem Rechner nachgeordneten Ausgabegerätes.

Um die Daten in einer Form darzustellen, die auch logische Bezüge innerhalb des aufgenommenen Programms erkennen lässt, werden die Befehle zusammen mit Programmteile definierenden Anfangs- und Endadressen als Blöcke in aufeinanderfolgenden Speicherplätzen abgelegt, und Programmrücksprünge kennzeichnende Befehle sind in die Reihe der in den Speicherplätzen abgelegten Befehle eingeordnet; den Befehlen werden ihrer Befehlsart entsprechend Symboldaten zugeordnet und daraus ein Flussdiagramm erzeugt.

Die Erfindung ist vor allem bei Logikanalysatoren anwendbar.

Siemens Aktiengesellschaft
Berlin und München

Unser Zeichen
VPA

0162004

## Verfahren zur Darstellung der Daten eines in einem Speicher eines Rechners gespeicherten Programms

Die Erfindung bezieht sich auf ein Verfahren zur Darstellung der Daten eines im Betrieb einer elektronischen Schaltungsanordnung aufgenommenen und in einem Speicher eines Rechners gespeicherten Programms oder Programmteils auf dem Anzeigeteil eines dem Rechner nachgeordneten Ausgabegerätes. Derartige Verfahren werden als Logikanalyse bezeichnet und dienen sowohl der Analyse als auch der Fehlerfindung von Hard- und/oder Softwarefehlern in elektronischen Schaltungsanordnungen.

Bei einem bekannten Verfahren dieser Art (Zeitschrift "elektronik industrie", 9, 1983, S. 69 und 70) werden die in einem Speicher des Rechners gespeicherten Daten mit Hilfe eines Disassemblers in einen mnemotechnischen Code zurückgewandelt und in dieser Form beispielsweise auf dem Schirm eines Datensichtgerätes dargestellt. Anhand des in mnemotechnischem Code dargestellten Programms kann dann durch eine Bedienungsperson eine Interpretation erfolgen, wobei Interpretationshilfen durch zusätzliche Anzeigen auf dem Schirm nicht gegeben werden.

Der Erfindung liegt die Aufgabe zugrunde, ein Verfahren zur Darstellung der Daten eines im Betrieb einer elektronischen Schaltungsanordnung mit einer Datenverarbeitungsanlage aufgenommenen und abgespeicherten Programms vorzuschlagen, mit dem sich die Daten in einer Form darstellen lassen, die auch logische Bezüge innerhalb des aufgenommenen Programms erkennen läßt.

Kr 3 Sz / 12.04.1984

Zur Lösung dieser Aufgabe werden bei einem Verfahren der eingangs angegebenen Art erfindungsgemäß
die Daten aus dem Speicher abgerufen und auf Befehle untersucht,
Befehle zusammen mit Programmteile definierenden Anfangs- und Endadressen als Blöcke in aufeinanderfolgenden Speicherplätzen abgelegt, .
Programmrücksprünge kennzeichnende Befehle in die Reihe der als in aufeinanderfolgen Speicherplätzen abgelegten Befehle eingeordnet,
den Befehlen ihrer Befehlsart entsprechende Symbol-Daten zugeordnet und
daraus Zeichensymbole zur Darstellung eines Flußdiagramms des gespeicherten Programms oder Programmteils auf dem Anzeigeteil erzeugt.

Der wesentliche Vorteil des erfindungsgemäßen Verfahrens besteht darin, daß mit ihm selbsttätig mittels eines der elektronischen Schaltungsanordnung mit der Datenverarbeitungsanlage zugeordneten Rechners das in der elektronischen Schaltungsanordnung abgelaufene Programm oder die abgelaufenen Programmteile in Form eines Flußdiagramms auf dem Anzeigeteil des Ausgabegerätes des Rechners dargestellt werden können, wodurch nicht nur die Analyse des in der elektronischen Schaltungsanordnung abgelaufenen Programms, sondern auch die Fehlerfindung erheblich erleichtert ist.

Es ist zwar aus dem Buch von K. Bartsch u. a. "Theorie und Praxis der Logikanalyse", 1981, S. 35 bis 37 die sog. Mapping-Darstellung von in einem Speicher eines Logikanalysators gespeicherten Daten bekannt, mit der in gewisser Hinsicht ein Programmfluß verfolgt werden kann, jedoch ist mit diesem Darstellungsverfahren nicht die Anzeige eines Flußdiagramms möglich.

Als vorteilhaft wird es im Hinblick auf eine Erleichterung der Leistungsbeurteilung des in der elektronischen Schaltungsanordnung abgelaufenen Programms angesehen, wenn bei dem erfindungsgemäßen Verfahren die aus dem Speicher abgerufenen Daten hinsichtlich der Anzahl der ausgeführten Schleifendurchläufe und/oder hinsichtlich der Schleifenlaufzeiten untersucht, die Ergebnisse der Untersuchung in alpha-numerischen Zeichen umgesetzt und

die alpha-numerischen Zeichen gemeinsam mit den Zeichensymbolen über einen Interface-Baustein auf dem Anzeigeteil des Ausgabegerätes dargestellt werden. Auf dem Anzeigeteil des Ausgabegerätes des Rechners läßt sich dann zusätzlich mit einem Blick erfassen, wie oft eine bestimmte Schleife durchlaufen worden ist bzw. welche Zeiten dazu benötigt worden sind.

Wenn es sich bei dem Ausgabegerät des bei der Durchführung des erfindungsgemäßen Verfahrens verwendeten Rechners um ein Datensichtgerät handelt, dann ist die Verwendung eines Videoprozessors als Interface-Baustein aus Kostengründen vorteilhaft.

Zur näheren Erläuterung der Erfindung ist in Figur 1 ein erstes Blockschaltbild dargestellt, um in groben Zügen das erfindungsgemäße Verfahren zu erläutern; in Figur 2 ist ein detaillierter Blockschaltplan wiedergegeben, um nähere Einzelheiten des erfindungsgemäßen Verfahrens beschreiben zu können. Es sei aber angemerkt, daß zur Durchführung des erfindungsgemäßen Verfahrens in der Regel nicht auf eine Hardware-Schaltung gemäß den dargestellten Blockschaltplänen, sondern auf einen Rechner zurückgegriffen wird, der alle Verfahrensschritte durchführt. Außerdem ist in Figur 3 ein Flußdiagramm zur Erläuterung des erfindungsgemäßen Verfahrens und in

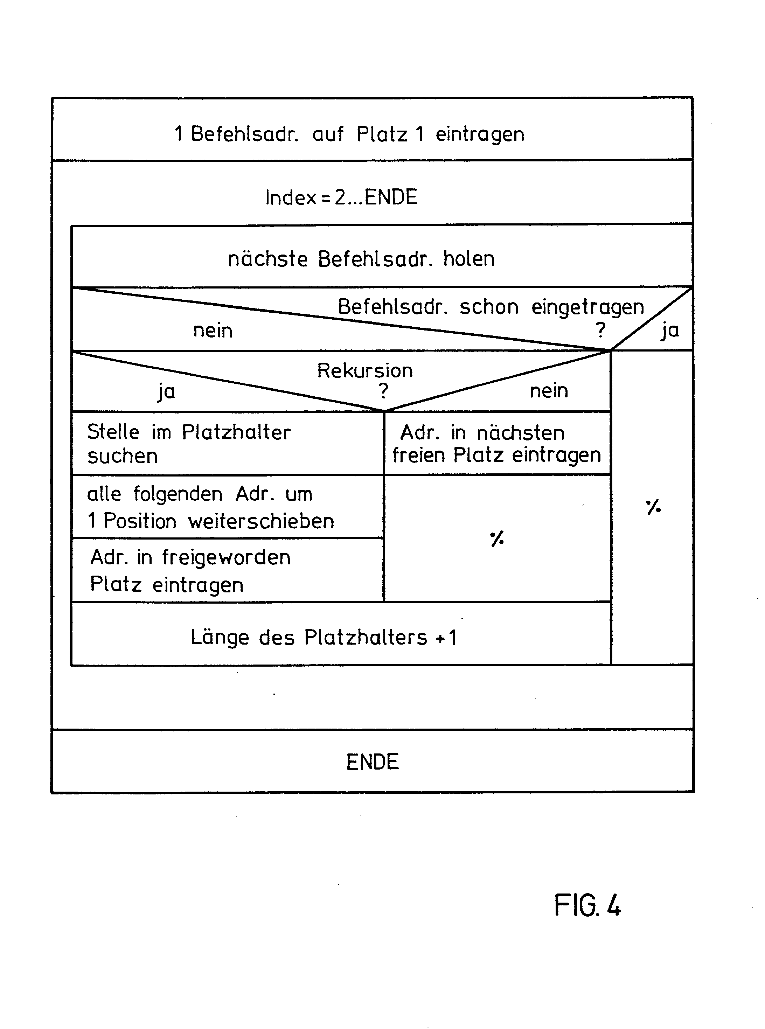

Figur 4 ein Struktogramm zur Erklärung des wesentlichen Teils des erfindungsgemäßen Verfahrens gezeigt.

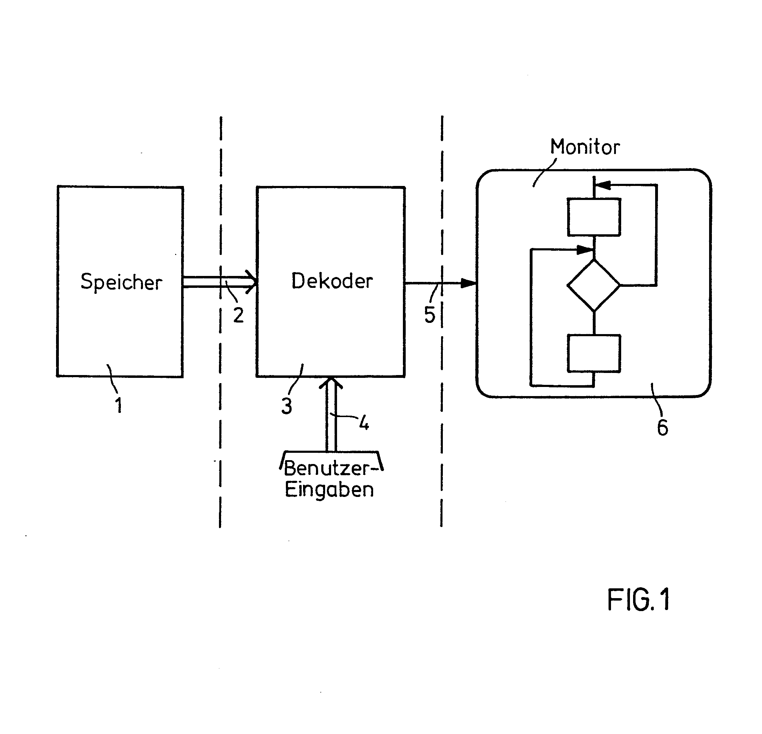

Wie Figur 1 zeigt, wird zur Durchführung des erfindungsgemäßen Verfahrens beispielsweise der Speicher 1 eines herkömmlichen Logikanalysators benutzt, wie er in seinem grundliegenden Aufbau beispielsweise in dem oben bereits erwähnten Buch "Theorie und Praxis der Logikanalyse" von K. Bartsch u.a., 1981, Seiten 31 bis 33 beschrieben ist. An einem Speicher 1 eines im übrigen nicht dargestellten Logikanalysators ist über einen Datenbus 2 ein Dekoder 3 zur Flußdiagrammdarstellung angeschlossen. Diesem Dekoder 3 zur Flußdiagrammdarstellung werden über einen weiteren Datenbus 4 Benutzer-Eingaben zugeführt. An den Ausgang des Dekoders 3 zur Flußdiagrammdarstellung ist über eine Verbindungsleitung 5 ein Ausgabegerät 6 angeschlossen, das aus einem Datensichtgerät bestehen kann. Auf dem Schirm dieses Gerätes 6 ist ein Flußdiagramm des in dem Speicher 1 gespeicherten Programms wiedergegeben.

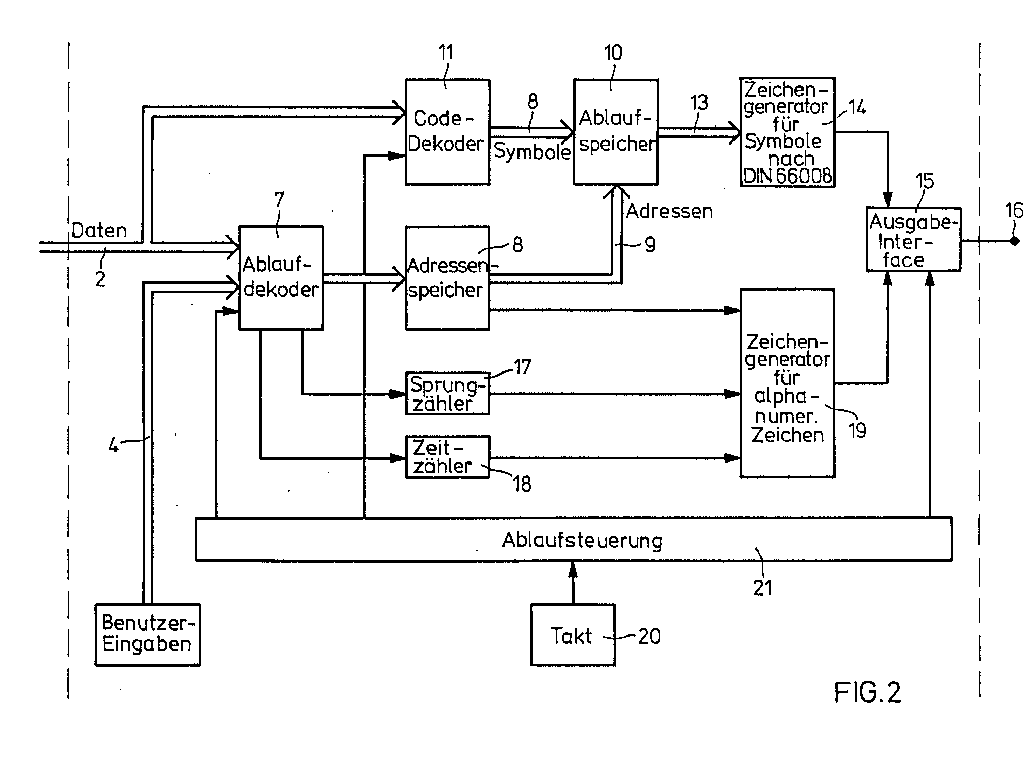

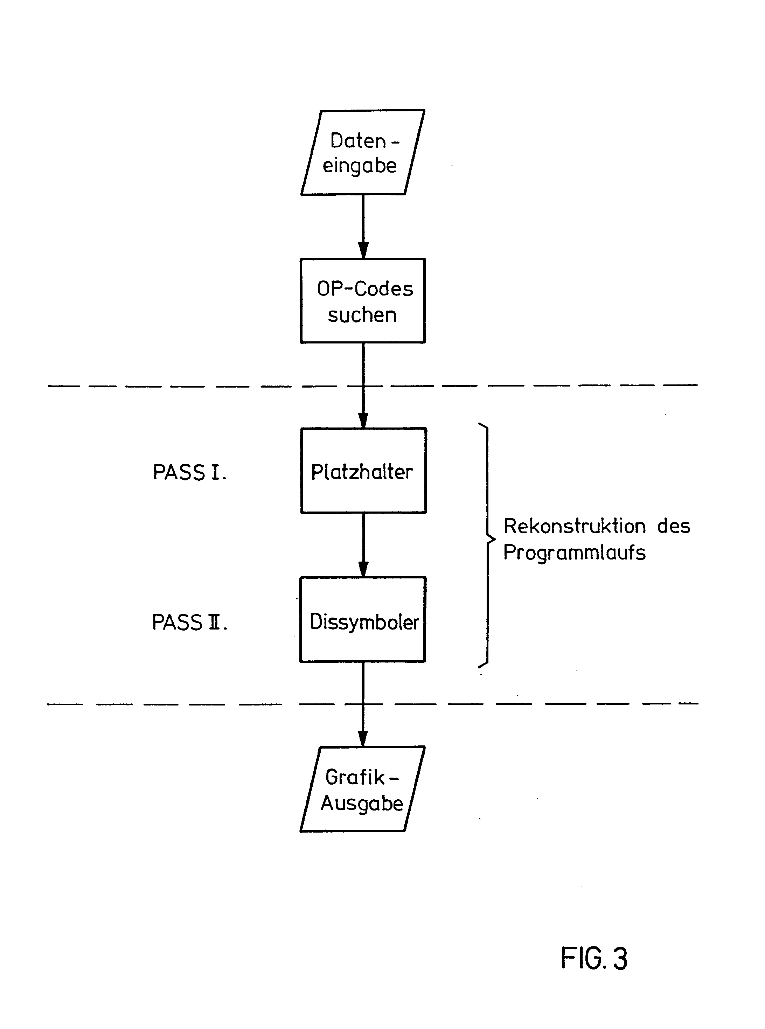

In Figur 2 ist der Dekoder 3 zur Flußdigrammdarstellung nach Figur 1 in seinen wesentlichen Komponenten aufgelöst dargestellt. Über den Datenbus 2 werden aus dem nicht dargestellten Speicher des Logikanalysators Daten in einen Ablauf-Dekoder 7 eingelesen, der die eingehenden Daten auf das Auftreten vorgegebener Befehlsklassen klassifiziert. Bei diesen vorgegebenen Befehlsklassen handelt es sich beispielsweise um die Befehlsklassen "allgemeine Operation", "nicht ausgeführte Verzweigung", "ausgeführte Verzweigung" und "Sprung nach Adresse". Die Befehle können aus mehr als einem Wort bestehen, so daß die Speicherplätze der sog. OP-Codes herausgesucht werden müssen; unter OP-Code wird dabei die Art des auszuführenden Befehls verstanden. Durch das Heraussuchen der OP-Codes ist sichergestellt, daß der Inhalt des Speichers des Logikanalysators analog zur Datenverarbeitungsanlage interpretiert wird. Die Adressen aufeinanderfolgender OP-Codes werden in einem Adressenspeicher 8
abgelegt. In Figur 3 sind diese Schritte im Flußdiagramm mit
"Dateneingabe" und "OP-Codes suchen" bezeichnet.

Der Ablaufdekoder 7 ist über den Eingangsbus 4 außerdem mit
Benutzer-Eingaben beaufschlagt. In dem Ablaufdekoder 7 wird
also der Programmablauf der zu überprüfenden elektronischen
Schaltungsanordnung mit der Datenverarbeitungsanlage anhand
der aus den aus dem Speicher über den Datenbus 2 aufgenommenen Daten interpretiert; außerdem werden die dem Ablaufdekoder 7 über den Datenbus 2 zugeführten Daten auf Rücksprungbefehle untersucht. Letzteres erfolgt gemäß dem Flußdiagramm
nach Figur 3 im Schritt PASS I "Platzhalter", in dem die
Adressen der ausgeführten Befehle in aufsteigender Reihenfolge eingeordnet werden. Es findet eine Umsetzung der ursprünglichen Adressen in entsprechende Platznummern der Befehle statt. Dabei werden in einem ersten Durchlauf alle
Programmrücksprünge erfaßt und im Platzhalter eingeordnet.
Zur Erläuterung dieser Umsetzung dient das Struktogramm gemäß
Figur 4.

Über die Benutzereingaben kann der Ablaufdekoder 7 so gesteuert werden, daß ein Bereich oder mehrere Bereiche des abgelaufenen Programms jeweils zu einem Block zusammengefaßt
werden, um die Übersichtlichkeit zu erhöhen. Diese Blockbildung wird durch das Ablegen von Anfangs- und Endadressen
im Ablaufdekoder 7 bewirkt.

Der Adressenspeicher 8 ist über einen zusätzlichen Bus 9
mit einem Ablaufspeicher 10 verbunden, dem auch Symbol-Daten
aus einem Code-Dekoder 11 zugeführt werden. Im Code-Dekoder
11 wird ein Teil der Schritte "Dissymboler" nach dem Flußdiagramm gemäß Figur 3 durchgeführt, da hier in einem zweiten
Durchlauf den Befehlsarten der Daten im Speicher des Logikanalysators entsprechende Darstellungssymbole (vgl. Symbole auf dem Gerät 6 nach Figur 1) in die zugeordneten Plätze des Platzhalters eingetragen werden. Diese Wirkungsweise entspricht weitgehend der eines Disassembler mit dem Unterschied, daß hier nicht Mnemonics, sondern Symbol-Codes für die verschiedenen Flußdiagrammsymbole, wie "Operation", "Sprung" oder "Verzweigung", erzeugt werden.

Mittels eines dem Ablaufspeicher 10 über einen Bus 13 nachgeordneten Zeichengenerators 14 lassen sich dann Signale erzeugen, die nicht nur die gängigen Symbole in einem Flußdiagramm auf dem Anzeigeteil eines Ausgabegerätes wiedergeben, sondern auch markieren, wohin beispielsweise ein Sprung erfolgt ist. Zu diesem Zwecke ist dem Zeichengenerator 14 ein Interface-Baustein 15 nachgeordnet, der an seinem Ausgang 16 mit einem nicht dargestellten Datensichtgerät verbunden sein kann; in diesem Falle ist der Interface-Baustein als Videoprozessor ausgeführt.

Wie die Figur 2 ferner zeigt, wird bei der Durchführung des erfindungsgemäßen Verfahrens mittels eines dem Ablaufdekoder 7 nachgeordneten Sprungzählers 17 die Anzahl der jeweils vorgenommenen Schleifendurchläufe erfaßt. Mit einem ebenfalls dem Ablaufdekoder 7 nachgeordneten Zeitzähler 18 wird die Zeit erfaßt, die zum Schleifendurchlauf erforderlich war. Sowohl die Ausgänge der Zähler 17 und 18 als auch ein weiterer Ausgang des Adressenspeichers 8 sind an einen weiteren Zeichengenerator 19 angeschlossen, in dem alpha-numerische Zeichen in einer Zuordnung zu den Schleifen erzeugt werden. Auch der Ausgang des weiteren Zeichengenerators 19 ist an den Interface-Baustein 15 angeschlossen.

Es sei an dieser Stelle nochmals hervorgehoben, daß sämtliche Bausteine nach Figur 2 lediglich eine symbolische Bedeutung haben und daß die Darstellung gewählt worden ist, um das er-

0162004

findungsgemäße Verfahren in seiner Wirkungsweise zu erläutern. In aller Regel wird das erfindungsgemäße Verfahren mittels eines Rechners durchgeführt, in dem sämtliche Bausteine nach Figur 2 verwirklicht sind. Dies gilt dann auch für einen Taktgeber 20 und eine Ablaufsteuerung 21, die ausgangsseitig sowohl mit dem Ablaufdekoder 7, dem Code-Dekoder 11 und dem Interface-Baustein 15 verbunden ist.

3 Ansprüche
4 Figuren

Patentansprüche

1. Verfahren zur Darstellung der Daten eines im Betrieb einer elektronischen Schaltungsanordnung aufgenommenen und in einem Speicher eines Rechners gespeicherten Programms oder Programmteils auf dem Anzeigeteil eines dem Rechner nachgeordneten Ausgabegerätes, d a d u r c h   g e k e n n z e i c h - n e t ,
daß die Daten aus dem Speicher abgerufen und auf Befehle untersucht werden,
daß die Befehle zusammen mit Programmteile definierenden Anfangs- und Endadressen als Blöcke in aufeinanderfolgenden Speicherplätzen abgelegt werden,
daß Programmrücksprünge kennzeichnende Befehle in die Reihe der in aufeinanderfolgenden Speicherplätzen abgelegten Befehle eingeordnet werden,
daß den Befehlen ihrer Befehlsart entsprechende Symbol-Daten zugeordnet werden und
daß daraus Zeichensymbole zur Darstellung eines Flußdiagramms des gespeicherten Programms oder Programmteiles auf dem Anzeigeteil erzeugt werden.

2. Verfahren nach Anspruch 1 , d a d u r c h   g e k e n n - z e i c h n e t ,
daß die aus dem Speicher abgerufenen Daten hinsichtlich der Anzahl der ausgeführten Schleifendurchläufe und/oder hinsichtlich der Schleifenlaufzeiten untersucht werden,
daß die Ergebnisse der Untersuchung in alpha-numerische Zeichen umgesetzt werden und
daß die alpha-numerischen Zeichen gemeinsam mit dem Zeichensymbolen über einen Interface-Baustein auf dem Anzeigeteil des Ausgabegerätes dargestellt werden.

3. Verfahren nach Anspruch 1 oder 2, d a d u r c h g e k e n n z e i c h n e t , daß bei einem Datensichtgerät als Ausgabegerät einen Videoprozessor als Interface-Baustein verwendet wird.

Monitor

Speicher → Dekoder →

2

5

3

4

Benutzer-
Eingaben

1

6

FIG.1

FIG.2

```
        ┌──────────┐
       /   Daten-  /
      /  eingabe  /
     └──────────┘
          │
          ▼
     ┌──────────┐
     │ OP-Codes │
     │  suchen  │
     └──────────┘
          │
  ─ ─ ─ ─ ┼ ─ ─ ─ ─ ─ ─ ─ ─
          │
          ▼
     ┌──────────┐  ⎫
PASS I. │Platzhalter│  │
     └──────────┘  │
          │         │   Rekonstruktion des
          ▼         │   Programmlaufs
     ┌──────────┐  │
PASS II. │Dissymboler│ │
     └──────────┘  ⎭
          │
  ─ ─ ─ ─ ┼ ─ ─ ─ ─ ─ ─ ─ ─
          │
          ▼
       ┌──────────┐
      /  Grafik-  /
     /  Ausgabe  /
    └──────────┘
```

FIG. 3

| 1 Befehlsadr. auf Platz 1 eintragen |
|---|

| Index = 2...ENDE |
|---|

| nächste Befehlsadr. holen |
|---|

Befehlsadr. schon eingetragen ?
nein        ja

Rekursion ?
ja        nein

| Stelle im Platzhalter suchen | Adr. in nächsten freien Platz eintragen | ⅞ |
|---|---|---|
| alle folgenden Adr. um 1 Position weiterschieben | ⅞ | |
| Adr. in freigeworden Platz eintragen | | |

| Länge des Platzhalters +1 |
|---|

| ENDE |
|---|

FIG. 4